# FASCICULE DE BREVET EUROPEEN

(11) **EP 3 758 161 B1**
(45) Date de publication et mention de la délivrance du brevet: **06.11.2024**
(21) Numéro de dépôt: 20180865.6
(22) Date de dépôt: 18.06.2020
(51) Int. Cl.: H01R 13/639, H01R 13/518, H01R 31/06, H01R 24/28, H01R 101/00, H01R 13/627

(54) **ENSEMBLE DE CONNEXION ÉLECTRIQUE, BORNIER ET STRUCTURE D'AÉRONEF**
ELEKTRISCHE VERBINDUNGSBAUGRUPPE, KLEMMLEISTE UND FLUGZEUGSTRUKTUR
ELECTRICAL CONNECTION ASSEMBLY, TERMINAL BLOCK AND AIRCRAFT STRUCTURE

(30) Priorité: 26.06.2019 FR 1906939
(43) Date de publication de la demande: 30.12.2020
(73) Titulaire: Radiall, 93300 Aubervilliers (FR)
(72) Inventeur: BECAVIN, Patrice, 37110 AUZOUER EN TOURAINE (FR); CASTILLON, Kévin, 37270 SAINT MARTIN LE BEAU (FR)
(74) Mandataire: Cabinet Nony

(56) Documents cités:
- CN-A- 106 025 714
- JP-A- 2013 251 148
- US-A- 2 441 393
- US-A- 3 206 717
- US-A- 5 230 634
- US-A- 5 376 022
- US-A1- 2009 011 637

## Description

### Domaine technique

La présente invention concerne le domaine des connecteurs électriques de puissance.

Plus particulièrement, elle concerne les ensembles de connexion électriques et les borniers (« terminal blocks » en anglais).

Par « bornier », on entend un dispositif permettant d'assurer la continuité électrique entre un câble et une autre partie de l'installation. Un bornier, également connu sous le nom de borne de connexion ou borne à vis est un module isolé électriquement qui fixe ensemble deux fils/câbles électriques ou plus, destinés à être reliés électriquement entre eux, et comprend un support isolant et au moins un composant de serrage pour fixer les fils/câbles. Par « contact », on entend ici et dans le cadre de la présente invention, un élément en matériau conducteur électrique pour laisser passer le courant électrique.

Bien que décrit en référence à une application privilégiée, l'aéronautique, et plus particulièrement le câblage d'avions, l'invention peut être mise en oeuvre dans toute autre application qui nécessite une connexion de puissance d'un grand nombre de câbles/fils électriques entre eux dans une zone de jonction.

### Technique antérieure

Une des opérations de câblage d'avions consiste à relier électriquement entre eux un grand nombre de câbles/fils électriques de puissance.

Cette opération est usuellement mise en oeuvre en utilisant un bornier à vis, fixé à la structure de l'avion, et dans lequel la pluralité de câbles/fils électriques est insérée puis fixée par serrage.

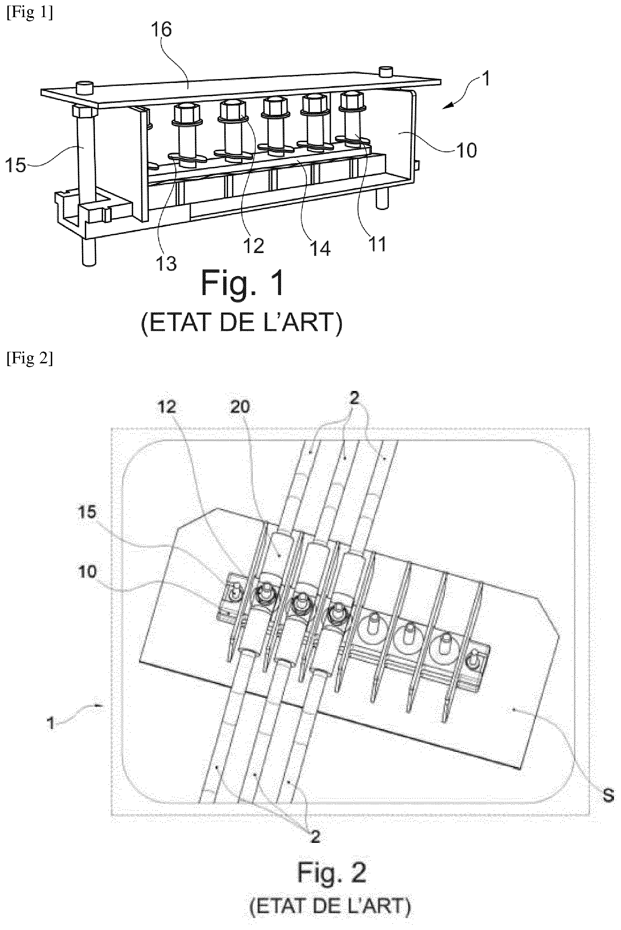

On a représenté en figures 1 et 2, un exemple d'un tel bornier existant, globalement désigné par la référence 1, qui est conçu pour relier deux ou plusieurs câbles 2 électriques équipés de cosses 20 à leurs extrémités par un système vis-écrou.

Ce bornier 1 comprend tout d'abord un support électriquement isolant 10 dans lequel sont fixés des vis de bornes 11 qui forment chacune avec un écrou 12 un système vis-écrou de serrage des cosses 20 équipant les câbles 2.

Une rondelle électriquement conductrice 13, de rondelle ondulée, est prévue pour chaque système vis-écrou.

Une barre électriquement conductrice 14 est traversée par chaque vis de bornes 11. Cette barre 14 forme une surface d'appui pour les cosses 20 de câbles et constitue ainsi un shunt électrique entre les câbles 2 à relier électriquement. Cette plaque 14 est optionnelle et chaque vis 11 est indépendante électriquement. De manière alternative, la plaque 14 peut ne s'étendre que sur une partie de longueur et ne connecter électriquement qu'une partie des vis.

Le support 10 est fixé à une structure S d'avion par des vis à colonnette 15.

Un capot 16 maintenu par les vis à colonnette 15 forme un capot de protection des systèmes vis-écrou 11, 12.

Le bornier 1 n'étant pas étanche, un capot supplémentaire appelé communément « parapluie » est fixé à la structure de l'avion, au-dessus du bornier pour empêcher l'humidité condensée de venir ruisseler directement sur les câbles 2 reliés dans le bornier.

Outre cet aspect non étanche, un tel bornier 1 à vis présente de nombreux inconvénients majeurs.

Tout d'abord, les cosses 20 doivent être parfaitement orientées pour être enfilées autour des vis de bornes 11 en vue d'une connexion électrique satisfaisante. Cela implique la plupart du temps pour un opérateur d'avoir à détorsader les câbles 2.

La sur-longueur des câbles, c'est-à-dire la longueur additionnelle à la côte nominale pour compenser les variations de câblage, ou à l'inverse la sous-longueur est difficile à gérer pour un opérateur au niveau du bornier 1, du fait de la rigidité des câbles 2 qui peuvent être solidarisés à plusieurs d'entre eux, en amont du bornier. Cette sur-longueur est d'autant plus pénalisante pour un opérateur lorsqu'il a détorsadé les câbles 2.

Le nombre de pièces à gérer (vis, écrous, rondelles, barre de shunt, capot, pièce parapluie) pour un opérateur en charge du montage est important avec, de surcroît, un risque élevé de pertes de pièces qui induit donc un risque de corps étranger, ou débris mécanique (FOD acronyme anglo-saxon pour « Foreign Object Damage ») pouvant causer des dommages, ce que l'on cherche absolument à éviter dans le domaine de l'aéronautique.

Ce risque de pertes de pièces est d'autant plus important que les zones dans lesquelles les borniers 1 existants sont mis en place ont un accès difficile et/ou très restreint et/ou une localisation gênante pour l'opérateur. Par exemple, le support isolant 10 est usuellement fixé du côté du plafond dans la structure d'un avion.

En plus des opérations intrinsèques de serrage par vis qui peuvent être longues pour un opérateur dédié, un autre opérateur est dédié systématiquement à la vérification de couples de serrage appliqués pour la fixation des cosses 20 des câbles.

Aussi, un bornier à vis nécessite de ne pas mettre les câbles sous tension pour éviter les risques électriques pour les opérateurs en charge de la connexion électrique. Ces risques ne peuvent d'ailleurs être complètement écartés lors de tests pour vérifier le bon fonctionnement.

Ainsi, au final, le temps d'installation d'un bornier à vis est long.

Enfin, les borniers à vis ne permettent pas d'avoir une modularité car le nombre de câbles 2 qui peuvent être reliés dans un seul et même bornier est figé.

Le brevet CN 106025714 B décrit un ensemble de connexion comprenant une prise et une terminaison de câble comprenant un manchon et des contacts retenus à l'intérieur du manchon, le manchon comprenant des stries sur sa périphérie extérieure pour son blocage dans la prise.

Il existe donc un besoin pour améliorer encore les borniers existants, notamment afin d'apporter plus de modularité, de faciliter l'installation, plus particulièrement dans des zones d'accès restreint et/ou pour un nombre important de fils/câbles électriques à relier, et de protéger les opérateurs en charge de la connexion contre les risques électriques.

L'invention vise à répondre à tout ou partie de ce besoin.

### Exposé de l'invention

Pour ce faire, l'invention a pour objet, selon l'un de ses aspects, un ensemble de connexion électrique, comprenant :
- au moins une terminaison de câble électrique, d'axe longitudinal (X1), comprenant un manchon et un contact, de préférence cylindrique, retenu à l'intérieur du manchon, le contact étant destiné à être serti sur un câble électrique, le manchon comprenant des stries sur sa périphérie extérieure ;
- au moins un module de connexion électrique, d'axe longitudinal (X), comprenant :
   - un corps en matériau électriquement isolant comprenant au moins deux cavités adaptées chacune pour loger un contact de la terminaison de câble électrique,
   - un tube électriquement conducteur, adapté pour relier au moins un contact de la terminaison de câble électrique à un autre élément conducteur électrique,
   - au moins un verrou, de préférence en forme de U, comprenant des reliefs agencés vers l'intérieur de chaque côté latéral, le verrou étant adapté pour coulisser sur le corps entre une position de déverrouillage et une position de verrouillage dans laquelle les reliefs du verrou s'intercalent dans les reliefs complémentaires d'un manchon de la terminaison, de
   sorte à venir bloquer cette dernière en translation par rapport au corps, dans une position d'insertion de ladite terminaison dans la cavité du corps, choisie parmi au moins deux possibles.

Les reliefs du manchon sont avantageusement des reliefs répétitifs selon son axe longitudinal (X1).

Avantageusement encore, les reliefs du verrou sont des reliefs répétitifs selon l'axe longitudinal (X) du module.

De préférence, les reliefs répétitifs du manchon sont identiques à ceux du verrou.

Selon une variante avantageuse, les reliefs répétitifs sont des stries.

De préférence, les positions possibles d'insertion de chaque terminaison sont entre une première position extrême d'insertion dans laquelle son verrouillage dans une cavité du dessus par impossibilité d'intercalage de reliefs du verrou en U coulissant dans les reliefs du manchon de la terminaison et une deuxième position extrême d'insertion dans laquelle son manchon vient en butée longitudinale contre le tube conducteur.

Selon un mode de réalisation, le module peut comprendre au moins deux verrous, de préférence en U, adaptés pour coulisser sur le corps indépendamment l'une de l'autre.

Selon un autre mode de réalisation, comprenant deux cavités du module alignées, de préférence parallèlement à l'axe longitudinal (X) du module.

Selon encore un autre mode de réalisation, le module comprend au moins deux rangées de deux cavités agencées l'une sur l'autre. Selon ce mode, les deux tubes conducteurs logés dans les rangées de cavités peuvent reliés électriquement entre eux par un shunt électrique ou être non connectés électriquement entre eux.

Selon une variante avantageuse de réalisation, il peut être prévu au moins un marquage d'identification qui s'il reste(nt) visible(s) après l'insertion d'une terminaison de câble, signifie(nt) un verrouillage impossible de la terminaison.

Avantageusement, le module comprend un ou plusieurs joints d'étanchéité agencé(s) à la périphérie extérieure d'un contact du niveau d'une zone de contact avec le manchon dans lequel il est raccordé, de préférence serti.

Autrement dit, l'invention consiste essentiellement en une cavité dans le corps d'un module de connexion dans laquelle on peut insérer une terminaison de câble électrique qui peut être fixée et verrouillée dans au moins deux positions d'insertion distinctes, de préférence d'une multitude, par un coulissement/translation d'une plaque de verrouillage sur le corps qui est munie de reliefs, de préférence des stries qui s'intercalent dans des reliefs complémentaires, de préférence des stries du manchon de la terminaison.

Cette translation avec imbrication des reliefs complémentaires (stries) assure le verrouillage individuel au module de chaque terminaison de câble électrique.

Toutes les terminaisons de câbles électriques fixées et ainsi verrouillées viennent réaliser des liaisons électriques souhaitées entre elles.

L'invention a également pour objet un ensemble de connexion à bornier, destiné notamment à relier une pluralité de câbles électriques entre eux, comprenant :
- au moins un ensemble de connexion tel que décrit précédemment dont le au moins un module de connexion électrique comprend en outre :
   - au moins un pion de positionnement faisant saillie du corps vers l'extérieur du module,
   - au moins une plaque de verrouillage, adaptée pour coulisser sur le corps entre une position de verrouillage et une position de déverrouillage, la plaque de verrouillage comprenant un relief de verrouillage ;

   - au moins un rail-support, destiné à être fixé à une structure, notamment une structure d'aéronef, comprenant :

- au moins une rainure d'insertion, adaptée pour insérer le pion de positionnement,
- au moins une rainure de fixation dans le prolongement de la rainure d'insertion, la rainure de fixation étant adaptée pour permettre la fixation du module par translation du pion de positionnement depuis la rainure d'insertion ;
- au moins un relief de verrouillage, adapté pour coopérer avec le relief complémentaire de verrouillage de la plaque lors de la translation du pion de positionnement de sorte à faire coulisser la plaque de sa position de déverrouillage vers sa position de verrouillage, et ainsi à verrouiller la fixation du module de connexion sur le rail-support.

Un exemple non couvert par l'invention a pour objet une terminaison de câble électrique, d'axe longitudinal (X1), comprenant un manchon et un contact, de préférence cylindrique, retenu à l'intérieur du manchon, le contact étant destiné à être raccordé, de préférence serti, sur un câble électrique, le manchon comprenant des reliefs sur sa périphérie extérieure, les reliefs étant configurés pour assurer le blocage en translation, de la terminaison dans un module de connexion électrique.

Selon une variante avantageuse, le manchon comprend une zone sans reliefs à son extrémité avant.

Selon une autre variante avantageuse, le manchon comprend au moins un marquage d'identification, notamment une marque de couleur, qui s'il reste visible après l'insertion de la terminaison, signifie un verrouillage impossible de la terminaison.

L'invention a encore pour objet un bornier, comprenant une pluralité d'ensembles de connexion électrique tels que décrits précédemment, de dimensions identiques ou différentes avec des cavités de dimensions identiques ou différentes pour loger des terminaisons de câbles électriques de dimensions identiques ou différentes.

L'invention concerne enfin une structure d'aéronef, comprenant un rail-support au moins un bornier comme ci-avant, est fixé.

Les avantages de l'invention sont nombreux par rapport à l'existant parmi lesquels on peut citer :
- une amélioration des temps d'installation des câbles électriques dans une structure, notamment une structure d'aéronef par un système de montage rapide qui peut être mis en oeuvre sans outil ;
- un accouplement individuel de chaque terminaison électrique dans un module de connexion mono ou multi cavités ;
- le rattrapage des sur-longueurs ou sous-longueurs des câbles à l'intérieur d'un module de connexion ;
- la suppression des problèmes d'orientation des câbles en remplaçant les cosses usuelles par des contacts cylindriques ;
- une protection des opérateurs contre les risques électriques, du fait qu'ils n'ont plus qu'à manipuler des pièces isolantes électriques (modules, rail) ;
- la suppression dans une structure d'aéronef des pièces parapluies existantes grâce à la solution étanche avec modules de connexion qui loge de manière étanche les terminaisons électriques ;
- l'absence de risque de perte de pièce (FOD pour « Foreign Object Damage »), car la solution selon l'invention est sans pièce détachable ;
- une connexion et déconnexion possibles avec la présence de courant ;
- une grande modularité qui peut facilement s'adapter à différents diamètres de câbles et différentes configurations de câblage.

Les applications envisagées pour un bornier selon l'invention sont nombreuses parmi lesquelles on peut citer, le câblage des avions civils.

### Brève description des dessins

[Fig 1] représente en vue en perspective d'un exemple de bornier à vis selon l'état de l'art utilisé pour le câblage électrique dans les structures d'avion;
[Fig 2] est une autre vue en perspective d'un bornier à vis selon l'état de l'art montrant des harnais de câbles à cosses connectés dans le bornier;
[Fig 3] est une vue en perspective d'un bornier selon l'invention à modules de connexion différents, de taille différente, fixés et verrouillés à un rail électriquement isolant;
[Fig 4] est une vue en perspective d'un ensemble de connexion selon l'invention à deux rangées de deux cavités avec des terminaisons de câbles électriques prêtes à être logées et connectées à l'intérieur du module;
[Fig 5] est une vue en perspective d'une terminaison de câble électrique avant l'insertion et la fixation du contact serti au câble dans le manchon de la terminaison;
[Fig 6] est une vue en perspective et partiellement en coupe d'une terminaison de câble électrique selon la figure précédente en configuration assemblée avec le contact inséré et fixé dans le manchon de la terminaison;
[Fig 7] est une vue en perspective d'une terminaison de câble électrique en configuration assemblée;
[Fig 8] est une vue en perspective d'un module de connexion selon l'invention ;
[Fig 9] est une autre vue en perspective d'un module de connexion selon l'invention ;
[Fig 10A] est une vue en perspective du dessus d'un rail-support;
[Fig 10B] est une vue en perspective du dessous d'un rail-support;
[Fig 11A] est une vue en perspective montrant une première étape d'insertion, de fixation et de verrouillage d'un module de connexion à un rail-support;
[Fig 11B] est une vue en perspective montrant une deuxième étape d'insertion, de fixation et de verrouillage d'un module de connexion à un rail-support;
[Fig 11C] est une vue en perspective et partiellement en arraché montrant une troisième étape d'insertion, de fixation et de verrouillage d'un module de connexion à un rail-support;
[Fig 11D] est une en perspective et partiellement en arraché montrant une quatrième étape d'insertion, de fixation et de verrouillage d'un module de connexion à un rail-support;
[Fig 11E] est une en perspective et partiellement en arraché montrant une cinquième étape d'insertion, de fixation et de verrouillage d'un module de connexion à un rail-support;
[Fig 11F] est une en perspective et partiellement en arraché montrant une sixième étape d'insertion, de fixation et de verrouillage d'un module de connexion à un rail-support;
[Fig 12] est une vue en perspective d'un bornier selon l'invention avec un module de connexion fixé et verrouillé sur un rail-support ;
[Fig 13] est une vue en perspective montrant l'étape de déverrouillage et d'enlèvement du module de connexion du rail-support;
[Fig 14] illustre en vue de perspective et coupe longitudinale un mode de réalisation d'un module de connexion à deux rangées de cavités l'une sur l'autre, reliées électriquement entre elles par un shunt électrique interne au module;
[Fig 15] illustre en vue de perspective et coupe longitudinale un mode de réalisation d'un module de connexion à deux rangées de cavités l'une sur l'autre, mais à la différence de la figure précédente, sans shunt électrique interne au module;
[Fig 16A] illustre dans un premier temps, en vue de perspective, l'approche d'une terminaison de câblage électrique devant une cavité d'un module de connexion selon la figure 14 ;
[Fig 16B] illustrent dans un deuxième temps, en vue de perspective, l'insertion et le verrouillage d'une terminaison de câblage électrique dans une cavité d'un module de connexion selon la figure 14 ;
[Fig 17] illustre en vue de perspective l'approche avant son insertion et verrouillage d'une autre terminaison de câblage électrique en regard d'une autre cavité d'un module de connexion selon la figure 14 ;
[Fig 18] est une vue en perspective et en coupe partielle montrant une plaque de verrouillage en U avant son coulissement pour le verrouillage d'une terminaison de câblage électrique dans un module de connexion selon la figure 14 ;
[Fig 19] est une vue en perspective montrant une plaque de verrouillage en U immédiatement avant son coulissement pour le verrouillage d'une terminaison de câblage électrique ;
[Fig 20] est une vue de dessous, en coupe partielle et de détail montrant le verrouillage d'une terminaison de câblage électrique par une plaque de verrouillage en U ;
[Fig 21] est une vue en coupe longitudinale montrant le verrouillage de deux terminaisons de câblage électrique dans un module de connexion selon la figure 14, les terminaisons étant verrouillées avec des longueurs insérées différentes ;
[Fig 22] est une vue en perspective et en coupe partielle montrant une plaque de verrouillage en U avant son coulissement pour le verrouillage d'une terminaison de câblage électrique dans un module de connexion selon la figure 14 ;
[Fig 23] est une vue en perspective de détail de la figure 22 ;
[Fig 24] est une vue en perspective de l'extérieur d'une configuration selon la figure 22 ;
[Fig 25] est une vue en perspective montrant le verrouillage finalisé d'une terminaison de câblage électrique dans un module de connexion selon la figure 14 ;
[Fig 26] est une vue en perspective et en détail montrant les moyens de verrouillage de la plaque de verrouillage en U avant son coulissement pour le verrouillage d'une terminaison de câblage électrique dans un module de connexion selon la figure 14 ;
[Fig 27] est une vue en perspective montrant le déverrouillage, au moyen d'un tournevis, d'une terminaison de câblage électrique d'un module de connexion selon la figure 14
[Fig 28] est une autre vue en perspective montrant le déverrouillage, au moyen d'un tournevis, d'une terminaison de câblage électrique d'un module de connexion selon la figure 14
[Fig 29] illustre en vue de perspective et coupe longitudinale un mode de réalisation d'un module de connexion à deux rangées de cavités l'une sur l'autre, reliées électriquement entre elles par un shunt électrique interne au module et avec un verrou commun à deux terminaisons insérées l'une sur l'autre dans le corps du module ;
[Fig 30] reprend la figure 29 mais avec la présence de bouchons dans deux cavités du corps de module de connexion, afin de montrer la connexion électrique entre deux terminaisons insérées dans les autres cavités agencées l'une sur l'autre dans le corps du module ;
[Fig 31] reprend la figure 29 mais sans shunt électrique interne au module ;
[Fig 32] est une vue en perspective d'un module de connexion selon l'invention à une unique cavité pour une terminaison de câble électrique, destinée à être logées et connectée à l'intérieur du module, à une barre de connexion électrique ou busbar solidaire du tube électriquement conducteur ;
[Fig 33] est une vue en coupe longitudinale de la figure 32.

### Description détaillée

Dans l'ensemble de la présente demande, les termes « vertical », « inférieur », « supérieur », « bas », « haut », « dessous » et « dessus» sont à comprendre par référence par rapport à un bornier selon l'invention avec un module de connexion électrique en configuration fixé à un rail-support agencé à l'horizontal .

De même, les termes «interne» et «externe » sont à comprendre par rapport à un corps de module de connexion électrique selon l'invention.

Par souci de clarté, une même référence numérique est utilisée pour un même élément d'un câble électrique selon l'état de l'art et d'un câble électrique selon l'invention.

Les figures 1 et 2 ont déjà été décrites en détail en préambule. Elles ne seront donc pas commentées ci-après.

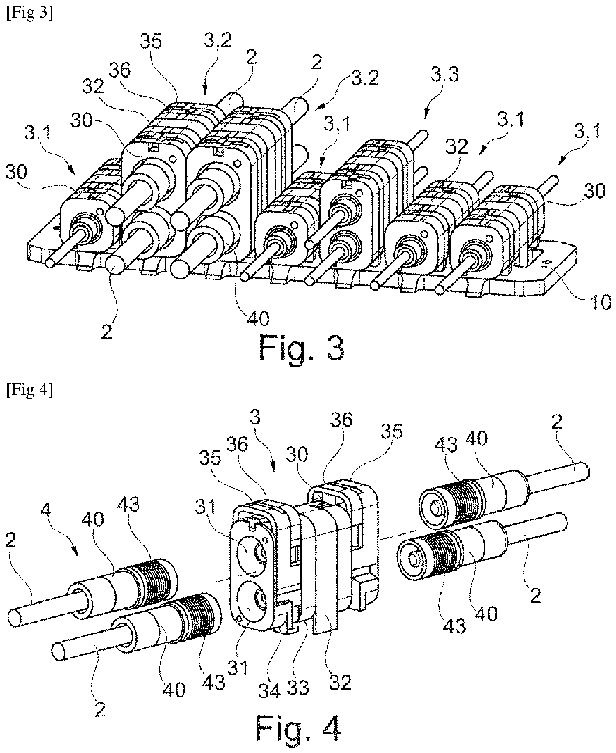

On a représenté sur la figure 3 un exemple de bornier selon l'invention, globalement désigné par la référence 1.

Ce bornier 1 comprend une pluralité de modules de connexion électrique 3, 3.1, 3.2, 3.3 à corps 30 électriquement isolant d'axe longitudinal X, les modules étant fixés et verrouillés individuellement sur un rail-support 10. Ce rail peut être en matériau électriquement isolant, mais également électriquement conducteur pour assurer une masse commune ou pour des raisons de protection contre les interférences électromagnétiques.

Chaque module de connexion électrique 3, 3.1, 3.2, 3.3 est destiné à loger, verrouiller et connecter entre elles des terminaisons de câble électrique 4.

Tel qu'illustré, les modules sont de dimensions différentes avec un nombre de cavités différent pour loger des terminaisons de câble électrique 4 de tailles différentes.

Plus précisément, les modules de connexion électrique 3.1 comprennent un corps 30 avec une seule rangée de deux cavités 31 en regard l'une de l'autre, chaque cavité 31 étant d'une première taille.

Les modules de connexion électrique 3.2 comprennent un corps 30 avec deux rangées de deux cavités 31 en regard l'une de l'autre, chacune de deux cavités 31 en regard l'une de l'autre, chaque cavité 31étant d'une deuxième taille.

Les modules de connexion électrique 3.3 comprennent un corps 30 avec deux rangées de deux cavités 31 en regard l'une de l'autre, chacune de deux cavités 31 en regard l'une de l'autre, chaque cavité 31 étant de la même première taille que les cavités 31 des modules 3.1

La figure 4 montre un module de connexion électrique 3 à deux rangées l'une sur l'autre de deux cavités 31 en regard, dans lequel des terminaisons de câble électrique 4 sont prêtes à être insérées et verrouillés.

Une terminaison de câble électrique 4 d'axe central X1 comprend un manchon électriquement isolant 40 et un contact électrique de forme cylindrique serti 41 sur un câble électrique 2, inséré et fixé par encliquetage à l'intérieur du manchon 40 au moyen d'un clip de rétention 42.

Le manchon 40 comprend enfin, sur sa périphérie extérieure des stries 43 qui s'étendent autour de l'axe X1 sur une partie de la longueur du manchon.

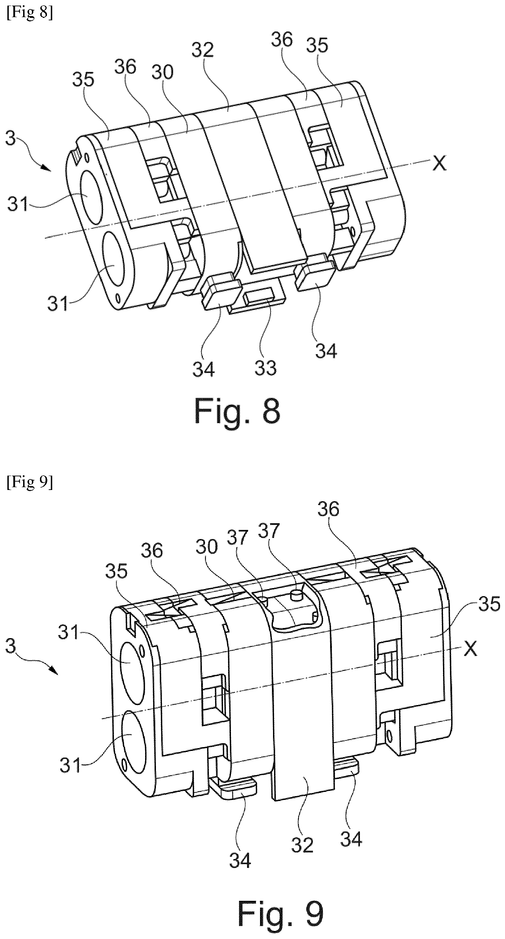

L'extérieur d'un module de connexion électrique 3 conforme à l'invention est illustré seul en figures 8 et 9.

Le corps 30 d'un module de connexion 3 comprend intérieurement au moins une rangée de deux cavités 31 de même taille en regard l'une de l'autre, destinées à relier électriquement entre elles deux terminaisons de câble électrique 4 comme expliqué par la suite.

Une première plaque de verrouillage 32 de forme générale en U est montée coulissante sur la partie centrale du corps 30, selon une direction transversale à l'axe X du module 3. Comme détaillé ci-après, cette première plaque de verrouillage 32 est destinée à venir verrouiller le module 3 sur le rail-support 10 par le biais de saillies d'accrochage 33 ménagées individuellement à l'intérieur de chaque branche du U.

Des pions de positionnement 34 font saillie du dessous du corps 30. Tels qu'illustrés, ces pions 34 présentent une section générale en forme de T avec une base élargie par rapport à la partie au-dessus formant la jonction avec le dessous du corps 30. Dans les modes de réalisation illustrés, deux pions 34 à distance l'un de l'autre font saillie du dessous du corps 30. Il va de soi qu'on peut prévoir un seul pion de positionnement 34 ou un nombre supérieur à 2.

Deux deuxièmes plaques de verrouillage 35 sont montées coulissantes chacune sur une partie d'extrémité du corps 30, selon une direction transversale à l'axe X du module 3. Comme détaillé ci-après, chaque deuxième plaque de verrouillage 35 est destinée à venir verrouiller une terminaison de câble électrique 4 à l'intérieur d'une cavité 31 du dessous du corps 30, une fois insérée dans cette dernière.

Deux troisièmes plaques de verrouillage 36 sont montées coulissantes chacune sur une partie d'extrémité du corps 30 à l'intérieur d'une plaque 35, selon une direction transversale à l'axe X du module 3.

Comme détaillé ci-après, chaque troisième plaque de verrouillage 36 est destinée à venir verrouiller une terminaison de câble électrique 4 à l'intérieur d'une cavité 31 du dessus du corps 30, une fois insérée dans cette dernière.

Des ressorts hélicoïdaux 37 sont logés entre le corps 30 et le fond du U de la première plaque de verrouillage 32.

Ces ressorts hélicoïdaux 37 servent de moyens de maintien de cette plaque de verrouillage 32 dans sa position de verrouillage par rappel de cette plaque de verrouillage 32 de sa position de déverrouillage vers sa position de verrouillage comme détaillé ci-après.

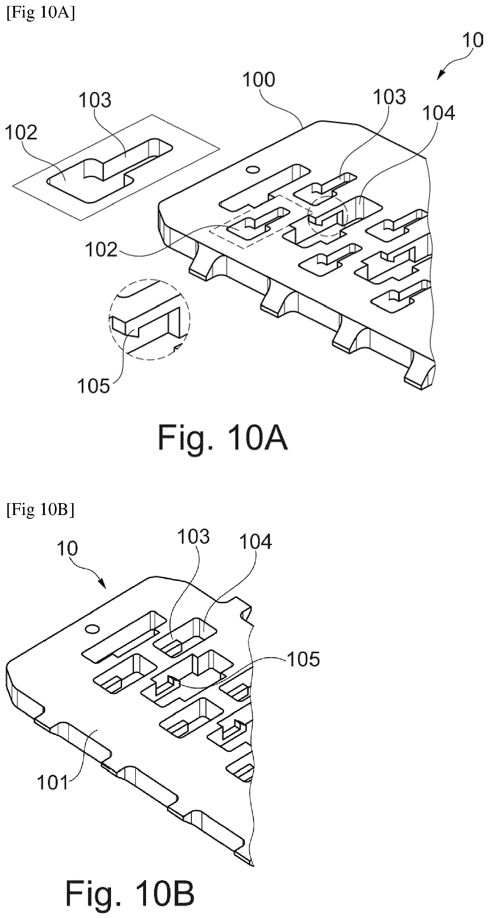

Comme illustré en figures 10A et 10B, le rail-support 10 comprend une pluralité de rainures traversantes entre sa face du dessus 100 et sa face de dessous 101.

Les rainures traversantes sont :
- des rainures d'insertion 102 dont la section de chacune est plus large que celle d'un pion de positionnement 34 d'un module de connexion 3,
- des rainures de fixation 103 chacune dans le prolongement d'une rainure d'insertion 102 dans le sens de la largeur du rail-support 10, et dont la section est moins large que celle d'un pion de positionnement 34 d'un module de connexion 3, avec une hauteur moindre qui permet de bloquer le pion 34 également selon l'axe Z ;
- des rainures de verrouillage 104 à l'intérieur de chacune desquelles est ménagé un ergot de verrouillage 105.

Chaque rainure d'insertion 102 est adjacente à une rainure de fixation 103 dans le sens de la largeur du rail.

Deux rainures d'insertion 102 et de fixation 103 adjacentes dans le sens de la largeur du rail-support 10 sont séparées dans le sens de la largeur du rail-support 10 d'une distance égale à la distance séparant deux pions de positionnement 34.

Deux demi-rainures de verrouillage 104 non jointives, de largeur égale à la moitié de ces dernières dans le sens de la longueur du rail 10, sont séparés dans le sens de la longueur du rail-support 10 d'une distance égale à la distance séparant les deux saillies 33 de la plaque de verrouillage 32.

Deux paires constituées chacune d'une rainure d'insertion 102 et d'une rainure de fixation 103 dans le prolongement, sont séparés dans le sens de la longueur du rail d'une distance égale à la distance séparant les deux pions de positionnement 34.

Ainsi, un motif complet d'insertion, de fixation et de verrouillage d'un module de connexion 3 sur le rail-support 10 est constitué de deux paires constituées chacune d'une rainure d'insertion 102 et d'une rainure de fixation 103 alignées, et de deux demi- rainures de verrouillage 104 non jointives séparées par les deux paires précitées.

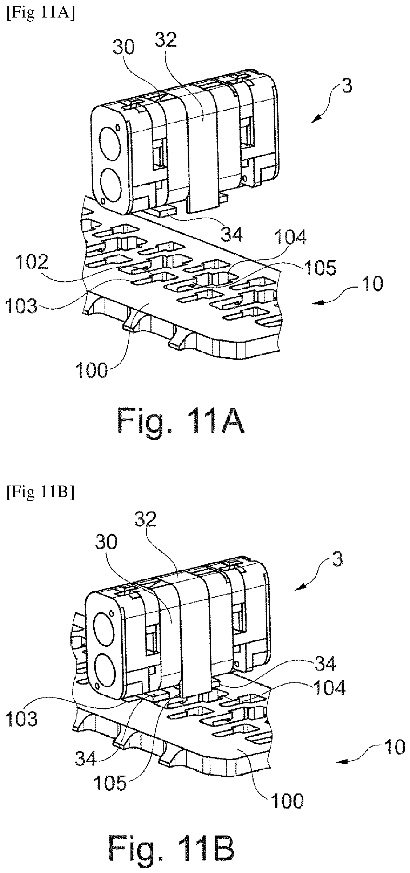

On décrit maintenant en référence aux figures 11A à 11F, le procédé de fixation et de verrouillage d'un module de connexion 3 à un rail-support 10 conformément à l'invention. Etape a/: l'opérateur approche un module de connexion 3 à l'aplomb du rail-support 10 en mettant en regard chaque pion de positionnement 34 avec une rainure d'insertion 102 (figure 11A).

Etape b/: l'opérateur vient alors centrer et insérer chaque pion de positionnement 34 dans une rainure d'insertion 102 (figure 11B).

Une fois l'insertion finie, le dessous du module de connexion 3 est en butée sur la face du dessus 100 du rail 10.

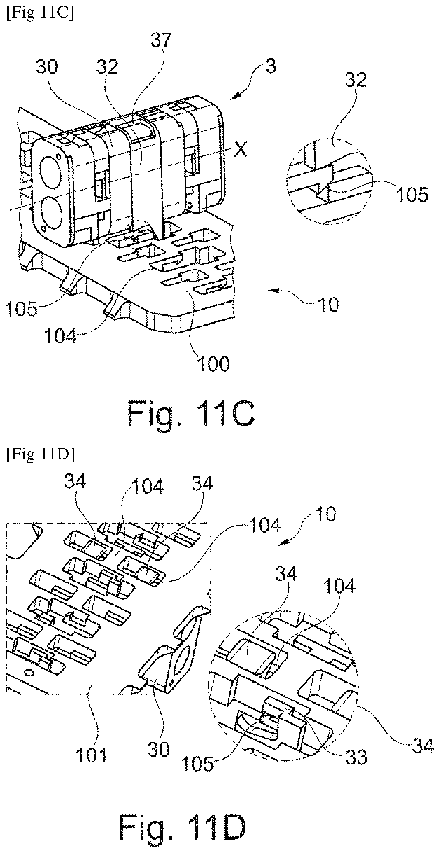

Etape c/: l'opérateur fait alors translater le module de connexion 3 selon son axe longitudinal X, ce qui provoque la translation de chaque pion de positionnement 34 dans une rainure de fixation 103 (figure 11C).

Cette translation provoque simultanément le contact mécanique entre au moins une des branches du U de la plaque de verrouillage 32 qui vient alors glisser sur l'ergot de verrouillage 105 (figures 11C, 11D). Plus précisément, la saillie de verrouillage 33 glisse sur le dessous de l'ergot 105 (figure 11D).

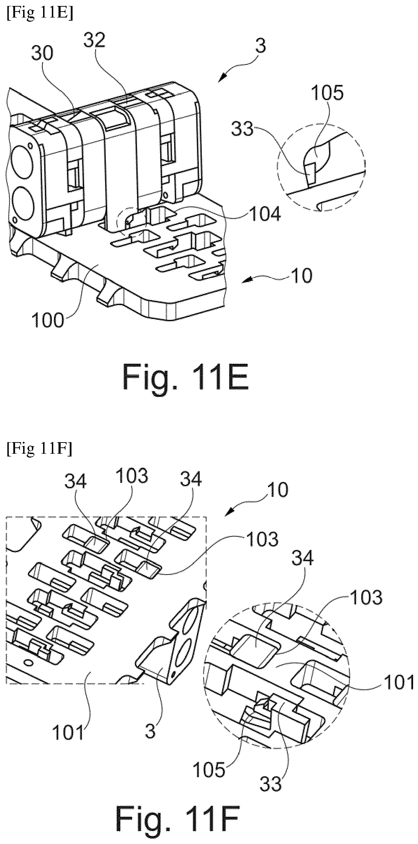

Etape d/: la translation est continuée jusqu'à ce qu'au moins un pion de positionnement 34 vienne en butée contre le fond de la rainure de fixation 103 (figures 11E, 11F). Dans cette position, la plaque de verrouillage 32 remonte en position haute grâce à l'effort de rappel du ou des ressorts hélicoïdaux 37.

La plaque 32 et par là le module de connexion 3 sont alors verrouillés au rail-support 10 par l'intermédiaire de chaque ergot 105 qui vient accrocher une saillie de verrouillage 33 (figures 11E, 11F).

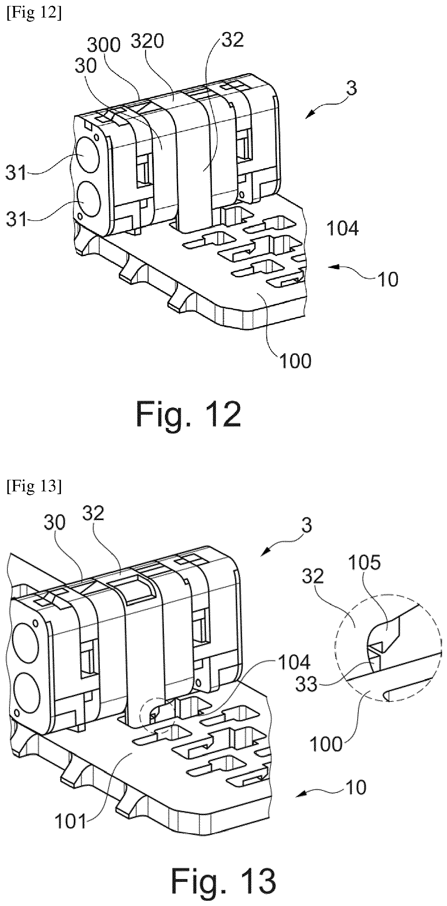

La figure 12 montre le module de connexion 3 en position fixée et verrouillée au rail-support 10. Une configuration avantageuse peut consister à donner un indicateur visuel à l'opérateur pour qu'il vérifie rapidement que la fixation et le verrouillage sont bien réalisés.

Comme visible sur cette figure 12, cet indicateur visuel consiste à configurer les différents éléments de fixation et de verrouillage tels que dans la position fixée et verrouillée la face du dessus 320 de la plaque de verrouillage 32 soit approximativement dans le même plan que la face du dessus 300 du corps 30.

S'il est nécessaire de réaliser le démontage du module de connexion 3, c'est-à-dire son déverrouillage et son enlèvement/retrait du rail-support 10, l'opérateur procède de la manière suivante.

Etape e/: l'opérateur appuie sur la plaque 32 vers le bas, ce qui provoque le désengagement de la saillie 33 de l'ergot de verrouillage 105 et donc le déverrouillage du module de connexion 3 du rail (figure 13).

Etape f/: l'opérateur peut alors fait translater le module de connexion 3 dans le sens inverse à celui des étapes c/ et d/, jusqu'à ce que chaque pion 34 atteigne la rainure d'insertion 102 et ainsi puisse être désengagé de celle-ci. Le retrait du module 3 peut alors être réalisé en l'écartant du rail 10, c'est-à-dire en le déplaçant vers le haut.

On décrit maintenant le montage avec verrouillage de terminaisons de câble électrique 4 à l'intérieur d'un module de connexion 3 conformément à l'invention.

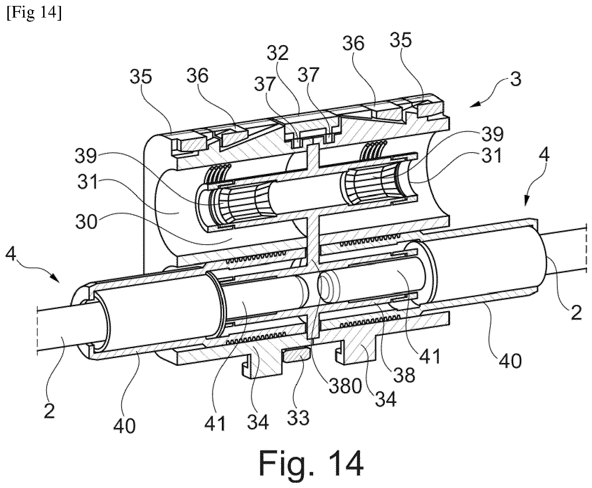

Comme illustré en figure 14, pour assurer la connexion électrique entre deux contacts 40 de deux terminaisons de câble 4 indépendantes à l'intérieur du corps 30 d'un module 3, une pièce électriquement conductrice 38 sous la forme d'un tube est fixée à l'intérieur du corps 30.

Ce tube conducteur 38 comprend ainsi deux cavités dans chacune desquelles un contact électrique 41 peut venir s'insérer avec contact mécanique sur sa périphérie extérieure. Ainsi la continuité électrique entre le câble électrique 2 d'une terminaison 4 et le tube conducteur 38 est assuré par ce contact avec le contact 41.

Le tube conducteur 38 peut être muni d'au moins une paroi de continuité électrique 380 à l'intérieur du corps 30, encore appelé shunt électrique, qui assure la continuité électrique entre au moins deux rangées de cavités 31 l'une sur l'autre dans lesquelles on insère au moins quatre contacts 41 que l'on souhaite connecter électriquement tous entre eux.

Autrement dit, le tube conducteur 38 avec au moins un shunt 380 permet de relier électriquement entre eux des contacts 41 qui sont insérés dans des cavités 31 du corps 30 sur des rangées différentes.

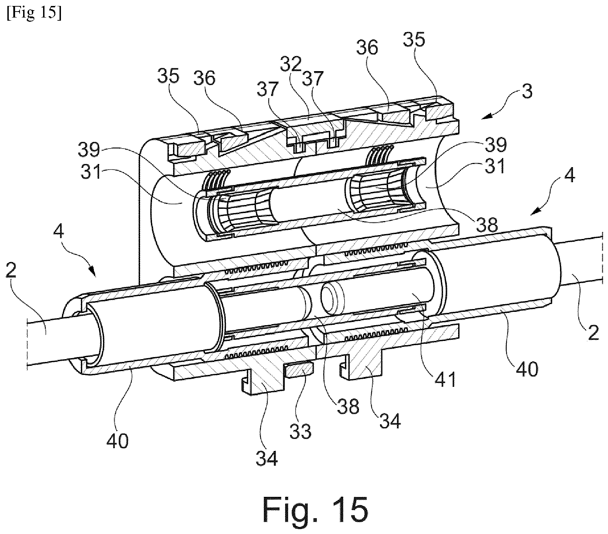

Il va de soi que l'on peut envisager un tube conducteur électrique 38 sans paroi de continuité électrique 380 et ainsi avoir des cavités du tube conducteur d'une rangée non reliées électriquement avec l'autre rangée en dessous ou au-dessus. Autrement dit, on peut prévoir un tube conducteur électrique 38 qui permet de relier électriquement uniquement deux terminaisons 4 insérées l'une en face de l'autre dans le corps 30. Cette configuration est montrée en figure 15.

A contrario, on peut aussi envisager un tube conducteur électrique avec une paroi électrique qui permet de relier électriquement entre elles uniquement deux terminaisons 4 insérées l'une au-dessus de l'autre dans le corps 30.

Pour améliorer la continuité électrique entre un contact 41 de terminaison 4 et la cavité d'un tube conducteur 38, on peut agencer à l'intérieur de ce dernier une bague multi contact électrique souple 39 (comme dans les contacts de puissance).

Comme illustré en figure 14, les terminaisons 4 et les cavités du tube conducteur sont dimensionnées de telle façon que dans leur position extrême insérée, c'est-à-dire lorsque les manchons 40 sont en butée longitudinale contre le tube conducteur 38, les contacts électriques 41 insérés l'un en regard de l'autre ne peuvent être en contact mécanique.

Selon l'invention, on prévoit avantageusement d'avoir une plaque de verrouillage (verrous) 35, 36 d'une terminaison de câble 4 dans une cavité 31 qui est indépendante de toutes les autres pour le même module 3.

Ainsi, dans les exemples illustrés, une terminaison de câble 4 peut être verrouillée dans chaque cavité 31 du dessous par une plaque de verrouillage 35 qui coulisse autour d'une des parties latérales du corps 30, tandis qu'une terminaison de câble 4 peut être verrouillée dans chaque cavité 31 du dessus par une plaque de verrouillage 36 qui coulisse également autour d'une des parties latérales du corps 30 mais entre une plaque de verrouillage 35 et la plaque de verrouillage 32 du module 3 sur un rail 10.

Les positions des verrous 35 et 36 sur le module 3 peuvent être inversées.

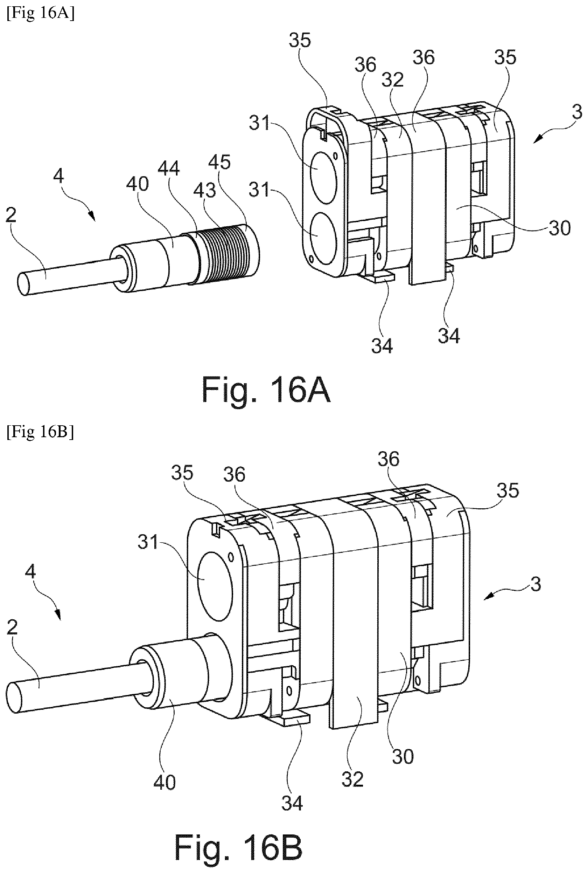

On décrit maintenant en référence aux figures 16A à 17, le procédé de montage, i.e. de fixation et de verrouillage, de deux terminaisons de câble 4 par deux verrous 35, 36 indépendants dans un même module de connexion 3.

Etape i/: l'opérateur fait coulisser vers le haut l'un des verrous coulissants 35, pour l'amener ainsi dans sa position haute de déverrouillage (figure 16A).

Etape ii/: l'opérateur vient alors insérer une terminaison de câble 4 dans une cavité 31 du dessous avec son contact 41 inséré en contact avec une bague souple 39 dans la cavité du tube conducteur 38 dégagée du verrou 35 en position haute (figure 16A).

Etape iii/: une fois l'étape ii/ achevée, l'opérateur fait translater le verrou 35 de sa position haute de déverrouillage à sa position basse de verrouillage dans laquelle il vient bloquer en translation la terminaison de câble 4 dans la cavité 31 dans laquelle elle est insérée (figure 16B).

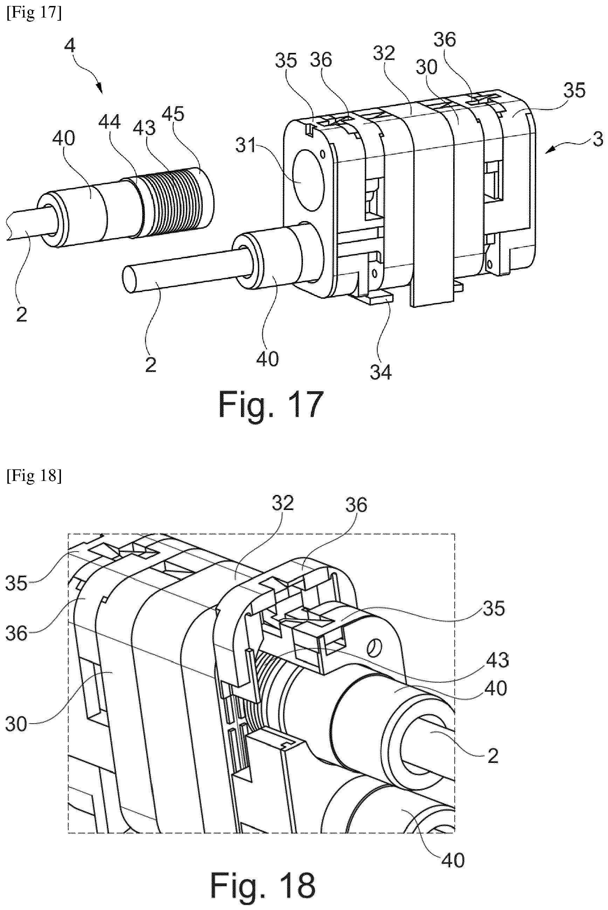

Etape i/: l'opérateur fait coulisser vers le haut un des verrous coulissants 36, pour l'amener ainsi dans sa position haute de déverrouillage (figure 17).

Etape jj/: l'opérateur vient alors insérer une terminaison de câble 4 dans une cavité 31 du dessus avec son contact 41 inséré en contact avec une bague souple 39 dans la cavité du tube conducteur 38 dégagée du verrou 36 en position haute (figure 17).

Etape jjj/ : une fois l'étape jj/ achevée, l'opérateur fait translater le verrou 36 de sa position haute de déverrouillage à sa position basse de verrouillage dans laquelle il vient bloquer en translation la terminaison de câble 4 dans la cavité 31 dans laquelle elle est insérée.

Le fonctionnement des verrous coulissants 35, 36 étant complètement indépendant l'un de l'autre, l'opérateur peut procéder aux étapes i/ à iii/ avant les étapes j/ à jjj/ ou dans un ordre inverse, i.e. les étapes j/ à jjj/ d'abord.

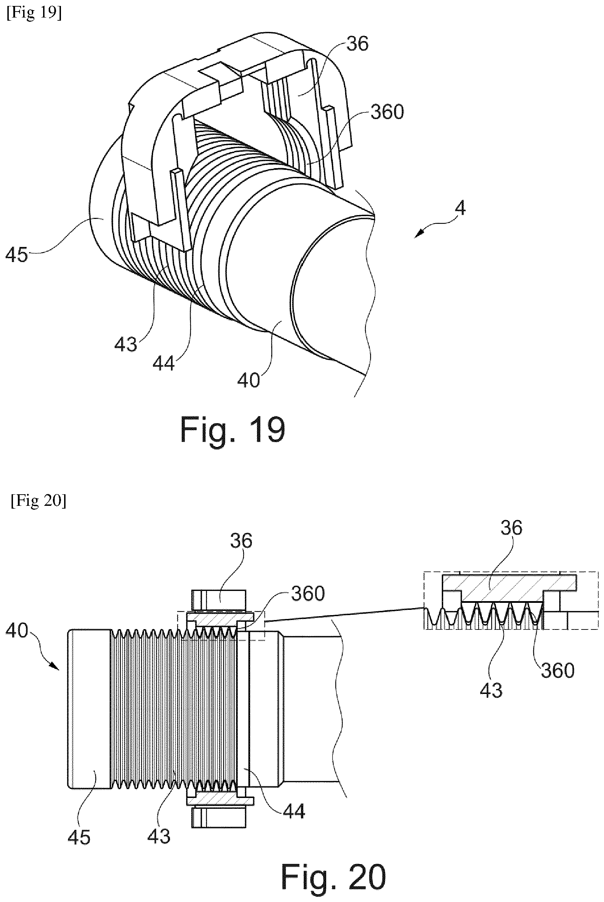

Les figures 18 à 20 montrent en détail un mode avantageux de verrouillage d'une terminaison de câble 4 réalisé au moyen d'un verrou coulissant 36 que l'on vient de décrire. Ce mode de réalisation est avantageusement identique pour le verrou coulissant 35. Lors du coulissement du verrou 36 vers les bas, les stries 360 réalisées à l'intérieur du verrou coulissant 36 viennent s'insérer dans les stries complémentaires 43 de la périphérie extérieure du manchon 40, ce qui verrouille ainsi, c'est-à-dire assure le blocage en translation, de la terminaison 4 dans le module de connexion 3.

Dans cette position de verrouillage, les stries 360 du verrou 36 s'intercalent donc entre les stries 43 du manchon 40.

Ce mode de verrouillage permet de définir un dispositif de rattrapage d'une sous-longueur ou d'une sur-longueur de câble 2.

En effet, en fonction des conditions d'installation dans une structure dans laquelle un bornier 1 selon l'invention est destiné à être fixé, les câbles 2 au bout desquels sont fixés les terminaisons peuvent présenter des longueurs plus ou moins grandes, qui peuvent s'écarter d'une longueur nominale définie initialement

En réalisant des stries 43 sur une grande partie de la longueur de manchon 40, le blocage par les stries complémentaires 360 permet de rattraper la sur ou sous longueur du câble 2 en insérant la terminaison 4 sur une longueur plus ou moins importante.

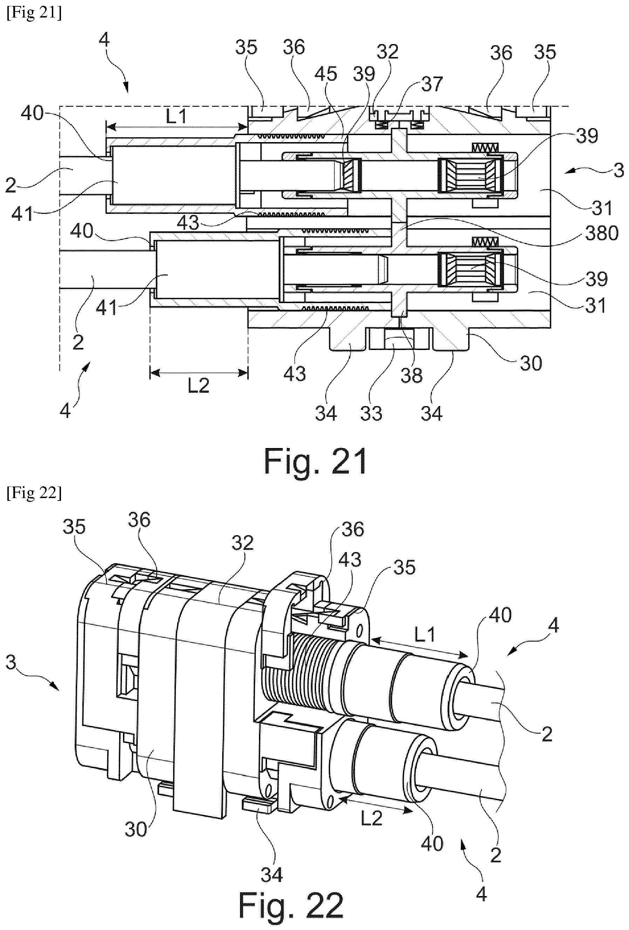

Les figures 21 et 22 illustrent cette manière de rattraper la sous- ou sur- longueur d'un câble 2 entre deux positions extrêmes possibles L1 et L2.

La terminaison 4 du dessus est dans une première position extrême d'insertion minimale dans laquelle son verrouillage dans la cavité 31 du dessus commence à être possible car les stries 360 du verrou peuvent s'intercaler dans les premières stries 43 du manchon. Dans cette première position extrême, le manchon 40 fait saillie d'une distance L1 à l'extérieur du module de connexion 3.

La terminaison 4 du dessous est dans une deuxième position extrême maximale d'insertion dans laquelle son contact 41 vient en butée longitudinale contre le tube conducteur 38. Dans cette deuxième position extrême, le manchon 40 fait saillie d'une distance L2 à l'extérieur du module de connexion 3.

Ainsi, le verrou 36 peut verrouiller en translation une terminaison de câble 4 dans l'une quelconque de ses positions insérées entre la première et la deuxième position extrême. Autrement dit, avec le verrouillage par stries complémentaires 43, 360, on peut rattraper une longueur de câble 2 sensiblement égale à L1-L2.

Selon l'invention, il est avantageux de prévoir des moyens visant à garantir à l'opérateur que l'insertion d'une terminaison de câble 4 est bien réalisée.

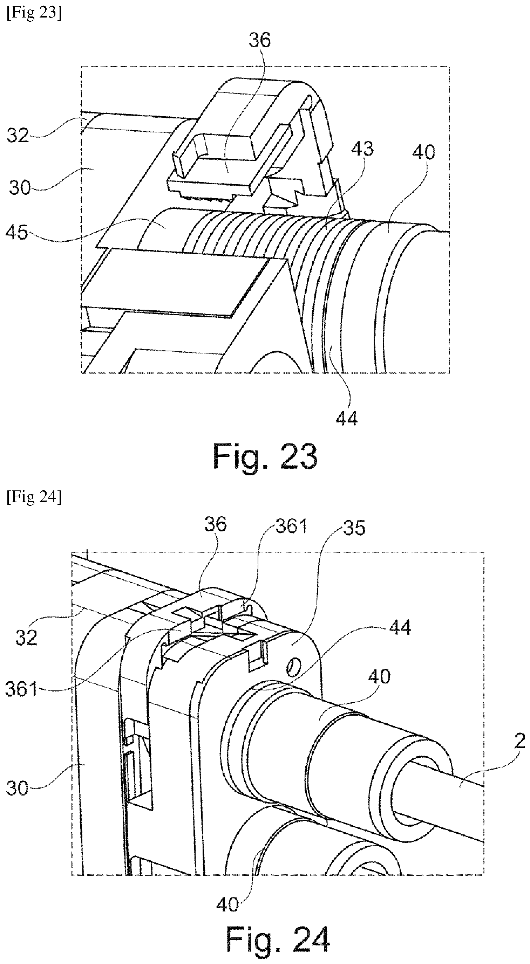

De fait, si l'insertion du manchon 4 est faite dans la première position extrême et au-delà de celle-ci vers l'extérieur du module, alors les stries 360 du verrou 36 viennent en appui contre un cylindre 45, c'est-à-dire une zone sans strie 45 réalisée à l'extrémité libre de ce manchon 40 (figure 23).

Un ou plusieurs marquages d'identification 44, 361, notamment en couleur permet(tent) à l'opérateur d'identifier rapidement si le manchon 40 est correctement inséré et verrouillé dans le module de connexion 3.

Ces marquages d'identification peuvent consister en un anneau de couleur 44 à l'arrière des stries 43 sur la périphérie extérieure du manchon 40 et/ou en une ou plusieurs marques localisées 361 de la même couleur sur la tranche du verrou coulissant 36.

Ainsi, si le manchon 40 n'est pas suffisamment inséré dans le module de connexion 3, l'une et/ou l'autre de ces marquages de couleur 44, 361 restent visible(s) après l'insertion et, cela se traduit mécaniquement par un verrouillage impossible de la terminaison 4 par le verrou coulissant 36 (figure 24).

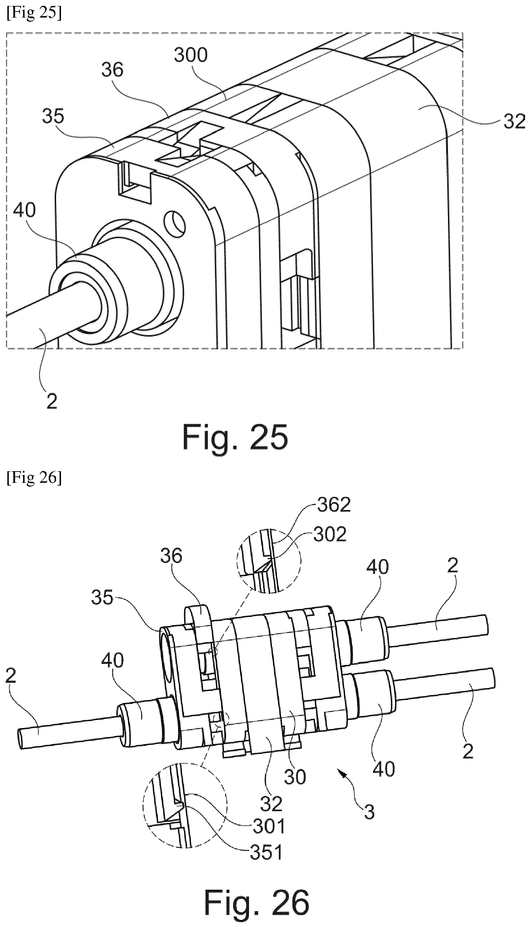

Au contraire, si le manchon 40 est correctement inséré dans le module de connexion 3, l'une et/ou l'autre de ces marquages de couleur 44, 361 ne sont plus visibles après l'insertion et, cela se traduit mécaniquement par un verrouillage possible de la terminaison 4 par le verrou coulissant 36 (figure 25).

Dans la position de verrouillage, la face extérieure supérieure du verrou 36 est de préférence dans le même plan ou légèrement en retrait que la face extérieure supérieure 300 du module 3. Il en va de même avec le verrou coulissant 35.

La figure 26 illustre une variante avantageuse pour maintenir chacun des verrous coulissants 35, 36 dans leurs positions de verrouillage et de déverrouillage.

Ainsi, des ergots 351, 362 réalisés en extrémité de chacun des verrous 35, 36, avantageusement en bout de chaque branche lorsque les verrous 35, 36 ont une forme générale de U, viennent s'accrocher respectivement dans des décrochements 301, 302 prévus à cet effet, lorsque les verrous 35, 36 sont dans leur position de déverrouillage ou de verrouillage.

Selon un autre mode de réalisation, on peut prévoir de bloquer en rotation tout ou partie des composants d'une terminaison de câble 4 lorsqu'elle est insérée dans un module de connexion 3.

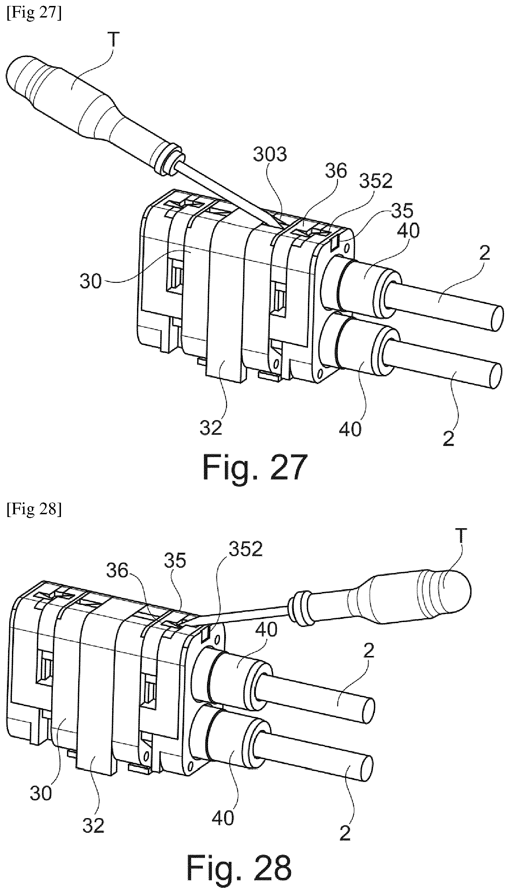

Les figures 27 et 28 illustrent un mode de déverrouillage des verrous coulissant 36 selon lequel le déverrouillage, c'est-à-dire le déplacement vers le haut depuis sa position de verrouillage d'un verrou 36 peut être réalisé par un tournevis standard T.

Comme cela ressort de ces figures 27 et 28, l'insertion de la pointe du tournevis T peut être inséré dans des fentes 303, 352 prévues à cet effet respectivement dans le corps 30 ou dans le verrou coulissant 35 qui est adjacent. Ainsi, le soulèvement du verrou coulissant 35 par effet de levier du tournevis T est facilité.

Cette insertion est d'autant plus facilitée qu'elle est donc possible depuis l'un ou l'autre des côtés du module 3, ce qui facilite les manipulations pour un opérateur dans les zones d'accès difficile.

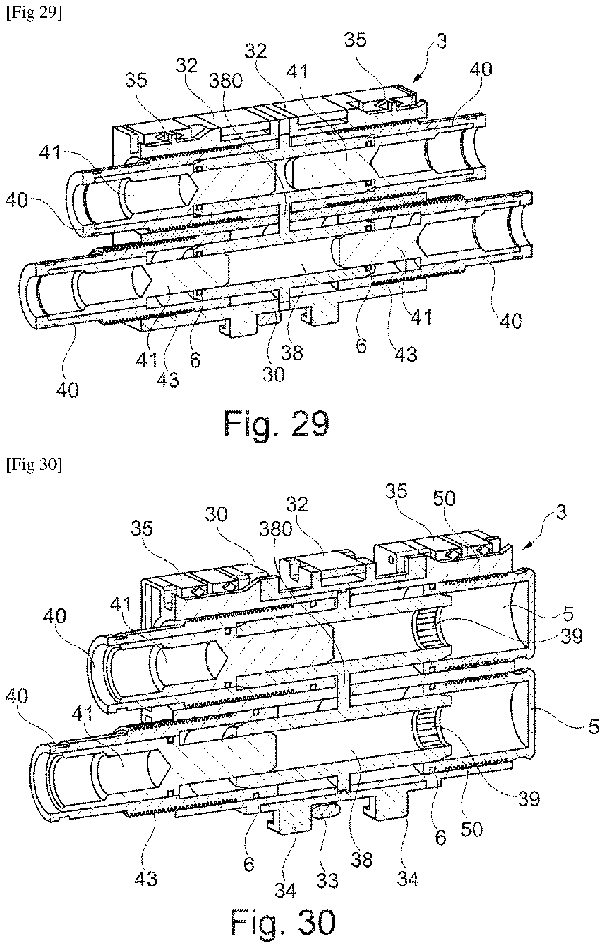

La figure 30 montre une connexion électrique entre deux terminaisons de câble 4 insérées et fixées dans des cavités 31 du corps 30 qui sont agencées l'une sur l'autre.

Cette connexion électrique interne au corps 30 se fait par le biais du tube conducteur électrique 38 et de sa paroi de liaison shunt 380 entre les deux rangées de cavités 31 l'une sur l'autre.

Dans une telle configuration, on peut prévoir avantageusement en lieu et place d'une terminaison de câble 4, la présence de bouchons 5 électriquement isolants insérés chacun dans une cavité 31. Chacun de ces bouchons 5 peut être fixé et verrouillé par un verrou coulissant 35, 36, dont les stries intérieures 350, 360 viennent en prise avec les stries extérieures 50 ménagées à cet effet sur la périphérie extérieure des bouchons 5.

Comme illustré en figures 29 et 30, l'étanchéité entre le corps 30 d'un module 3 et les terminaisons de câble 4 une fois celles-ci fixées et verrouillées à l'intérieur du corps, peut être avantageusement complétée par la présence de joints toriques 6. Ces joints toriques 6 peuvent avantageusement être agencés:
- à la périphérie intérieure d'une cavité du tube conducteur électrique 38 au niveau d'une zone de contact avec le contact 41 inséré à l'intérieur, et/ou
- à la périphérie extérieure d'un manchon 40 en bout de ce dernier (figure 30), et/ou
- à la périphérie extérieure d'un contact 41 au niveau d'une zone de contact avec le manchon 40 dans lequel il est clipsé (figure 30).

Ainsi, dans la configuration de la figure 29, l'étanchéité des terminaisons 4 dans le module est assurée uniquement pour l'interface électrique, i.e. entre chaque contact 41 et le tube conducteur électrique 38.

Dans la configuration de la figure 30, l'étanchéité complète de tous les composants électriques est garantie.

Les bouchons 5 peuvent également être munis de joints toriques 6 à leur périphérie extérieure (figure 30).

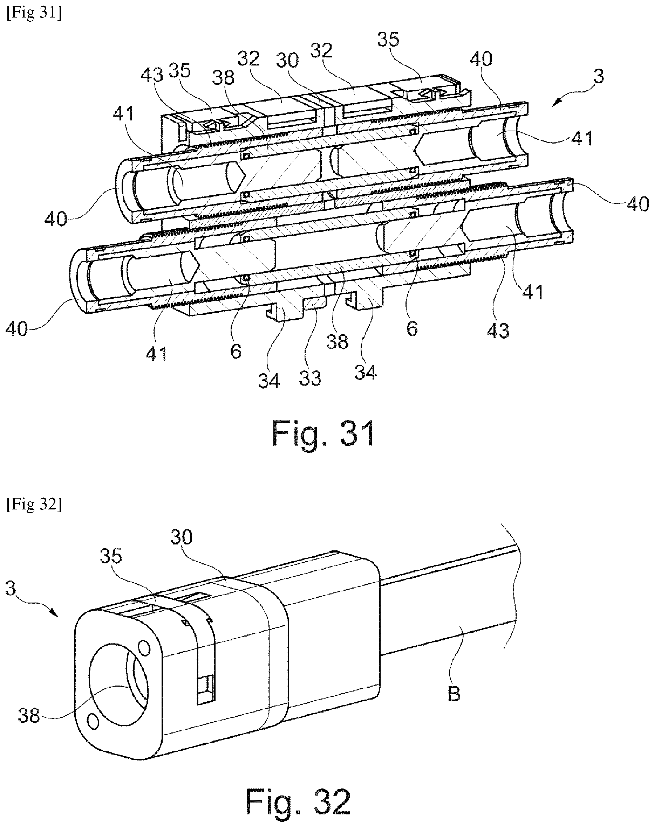

La figure 31 reprend la configuration de la figure 29, mais sans présence de paroi 380 formant le shunt électrique : ainsi chaque tube conducteur 38 reliant électriquement deux terminaisons 4 en regard l'une de l'autre, est indépendant de l'autre tube 38.

D'autres variantes et améliorations peuvent être prévues sans pour autant sortir du cadre de l'invention.

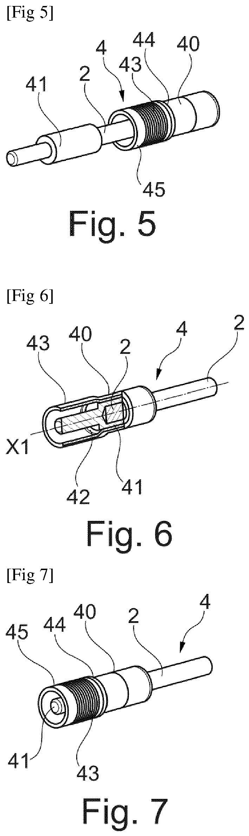

Si dans les exemples illustrés aux figures 3 à 31, la connexion électrique est réalisée entre au moins deux terminaisons de câble électrique 4 logées chacune au sein d'une cavité différente dans le corps 30 du module, l'invention peut tout-à-fait être mise en oeuvre avec un module à une unique cavité pour y loger une terminaison de câble à connecter à un élément conducteur électrique fixe, relié électriquement au tube conducteur 38.

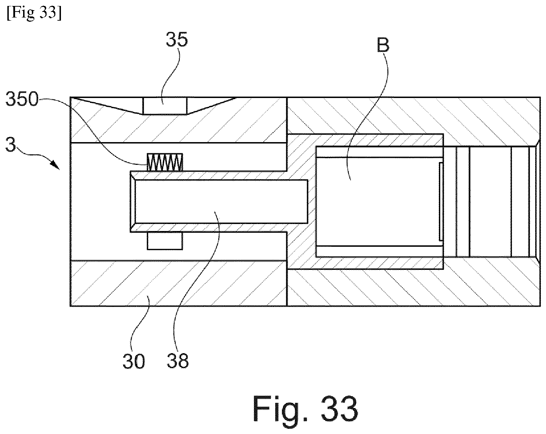

Une telle configuration est illustrée aux figures 32 et 33 : le module de connexion 3 montré comprend une unique cavité 31 pour une terminaison de câble électrique 4, le tube conducteur 38 étant solidaire d'une barre de connexion électrique ou busbar B.

Également si dans les exemples illustrés, la fixation et le verrouillage d'un module de connexion dans un rail-support se fait par une translation selon l'axe longitudinal X du module, c'est-à-dire dans le sens de la largeur du rail, on peut bien évidemment envisager une translation selon une direction différente, notamment une translation dans une direction orthogonale à l'axe X, c'est-à-dire dans le sens de la longueur du rail.

L'expression « comportant un » doit être comprise comme étant synonyme de « comportant au moins un », sauf si le contraire est spécifié.

## Revendications

1. Ensemble de connexion électrique, comprenant :
- au moins une terminaison de câble électrique (4), d'axe longitudinal (X1), comprenant un manchon (40) et un contact (41), de préférence cylindrique, retenu à l'intérieur du manchon, le contact étant destiné à être raccordé, de préférence serti, sur un câble électrique (2), le manchon (40) comprenant des reliefs (43) sur sa périphérie extérieure ;
- au moins un module de connexion électrique (3, 3.1, 3.2, 3.3), d'axe longitudinal (X), comprenant :
• un corps (30) en matériau électriquement isolant, comprenant au moins une cavité (31) adaptée pour loger la terminaison de câble électrique (4),
• un tube électriquement conducteur (38), adapté pour relier au moins un contact de la terminaison de câble électrique à un autre élément conducteur électrique (4, B),
• au moins un verrou (35, 36), de préférence en forme de U, comprenant des reliefs (360) agencés vers l'intérieur, le verrou étant adapté pour coulisser sur le corps (30) entre une position de déverrouillage et une position de verrouillage dans laquelle les reliefs (360) du verrou (35, 36) s'intercalent dans les reliefs complémentaires (43) d'un manchon (40) de la terminaison (4), de sorte à venir bloquer cette dernière (4) en translation selon l'axe (X) par rapport au corps (30), dans une position d'insertion de ladite terminaison (4) dans la cavité (31) du corps (30), l'ensemble de connexion électrique étant **caractérisé en ce que** la position d'insertion est choisie parmi au moins deux possibles (L1, L2).

2. Ensemble de connexion électrique selon la revendication 1, les reliefs (43) du manchon étant des reliefs répétitifs selon son axe longitudinal (X1)
les reliefs (360) du verrou étant de préférence, des reliefs répétitifs selon l'axe longitudinal (X) du module,
les reliefs répétitifs étant de préférence des stries.

3. Ensemble de connexion électrique selon la revendication 2, le nombre de reliefs (360) du verrou étant inférieur à celui (45) de la terminaison (4), de sorte à permettre un verrouillage dans une position d'insertion variable de la terminaison (4) dans la cavité.

4. Ensemble de connexion électrique selon l'une des revendications précédentes, les positions possibles d'insertion de chaque terminaison (4) étant entre une première position extrême d'insertion dans laquelle son verrouillage dans une cavité (31) du dessus par impossibilité d'intercalage de reliefs (360) du verrou coulissant dans les reliefs (43) du manchon de la terminaison (4) et une deuxième position extrême d'insertion dans laquelle son manchon (40) vient en butée longitudinale contre le tube conducteur (38).

5. Ensemble de connexion électrique selon l'une des revendications précédentes, le module comprenant au moins deux verrous (35, 36), de préférence en U, adaptés pour coulisser sur le corps (30) indépendamment l'une de l'autre.

6. Ensemble de connexion électrique selon l'une des revendications précédentes, comprenant deux cavités du module alignées, de préférence parallèlement à l'axe longitudinal (X) du module.

7. Ensemble de connexion électrique selon l'une des revendications précédentes, le module comprenant au moins deux rangées de deux cavités agencées l'une sur l'autre.

8. Ensemble de connexion électrique selon la revendication 7, les deux tubes conducteurs (38) logés dans les rangées de cavités étant reliés électriquement entre eux par un shunt électrique (380) ou étant non connectés électriquement entre eux.

9. Ensemble de connexion électrique selon l'une des revendications précédentes, comprenant au moins un marquage d'identification (44, 361) qui s'il reste(nt) visible(s) après l'insertion d'une terminaison de câble (4), signifie(nt) un verrouillage impossible de la terminaison (4).

10. Ensemble de connexion électrique selon l'une des revendications précédentes, le module comprenant un ou plusieurs joints d'étanchéité (6) agencés à la périphérie extérieure d'un contact (41) au niveau d'une zone de contact avec le manchon (40) dans lequel il est raccordé, de préférence serti.

11. Ensemble de connexion à bornier, destiné notamment à relier une pluralité de câbles électriques entre eux, comprenant :
- au moins un ensemble de connexion selon l'une des revendications précédentes dont le au moins un module de connexion électrique (3), comprend en outre :
• au moins un pion de positionnement (34) faisant saillie du corps vers l'extérieur du module,
• au moins une plaque de verrouillage (32), adaptée pour coulisser sur le corps entre une position de verrouillage et une position de déverrouillage, la plaque de verrouillage comprenant un relief de verrouillage (33);
- au moins un rail-support (10), destiné à être fixé à une structure, notamment une structure d'aéronef, comprenant :
• au moins une rainure d'insertion (102), adaptée pour insérer le pion de positionnement,
• au moins une rainure de fixation (103) dans le prolongement de la rainure d'insertion, la rainure de fixation étant adaptée pour permettre la fixation du module par translation du pion de positionnement depuis la rainure d'insertion ;
• au moins un relief de verrouillage (105) adaptée pour coopérer avec le relief complémentaire de verrouillage (33) de la plaque lors de la translation du pion de positionnement de sorte à faire coulisser la plaque de sa position de déverrouillage vers sa position de verrouillage, et ainsi à verrouiller la fixation du module de connexion sur le rail-support.

12. Bornier (1), comprenant une pluralité d'ensembles de connexion selon l'une des revendications 1 à 10, les modules de connexion électrique (3.1, 3.2, 3.3) des ensembles de connexion étant de dimensions identiques ou différentes avec des cavités de dimensions identiques ou différentes pour loger les terminaisons de câbles électriques de dimensions identiques ou différentes.

13. Structure d'aéronef, comprenant un rail-support sur laquelle au moins un bornier (1) selon la revendication 12, est fixé.

## Patentansprüche

1. Elektrische Verbindungsbaugruppe, umfassend:
- mindestens einen elektrischen Kabelendverschluss (4) mit einer Längsachse (X1), der eine Hülse (40) und einen vorzugsweise zylindrischen Kontakt (41), der im Inneren der Hülse gehalten wird, umfasst, wobei der Kontakt dazu bestimmt ist, an ein elektrisches Kabel (2) angeschlossen, vorzugsweise gecrimpt zu werden, wobei die Hülse (40) Erhebungen (43) auf ihrem Außenumfang umfasst;
- mindestens ein elektrisches Verbindungsmodul (3, 3.1, 3.2, 3.3) mit einer Längsachse (X), welches umfasst:
• einen Körper (30) aus elektrisch isolierendem Material, der mindestens einen Hohlraum (31) umfasst, der dazu eingerichtet ist, den elektrischen Kabelendverschluss (4) aufzunehmen,
• ein elektrisch leitendes Rohr (38), das dazu eingerichtet ist, mindestens einen Kontakt des elektrischen Kabelendverschlusses mit einem anderen elektrisch leitenden Element (4, B) zu verbinden,
• mindestens einen vorzugsweise U-förmigen Riegel (35, 36), der Erhebungen (360) umfasst, die zum Inneren hin angeordnet sind, wobei der Riegel dazu eingerichtet ist, auf dem Körper (30) zu gleiten zwischen einer Entriegelungsposition und einer Verriegelungsposition, in der sich die Erhebungen (360) des Riegels (35, 36) in die komplementären Erhebungen (43) einer Hülse (40) des Endverschlusses (4) einfügen, so dass sie diesen Letzteren (4) in Translation entlang der Achse (X) bezüglich des Körpers (30) in einer Einsetzposition des Endverschlusses (4) in den Hohlraum (31) des Körpers (30) blockieren, wobei die elektrische Verbindungsbaugruppe **dadurch gekennzeichnet ist, dass** die Einsetzposition aus mindestens zwei möglichen (L1, L2) ausgewählt ist.

2. Elektrische Verbindungsbaugruppe nach Anspruch 1, wobei die Erhebungen (43) der Hülse Erhebungen sind, die sich entlang von deren Längsachse (X1) wiederholen,
wobei die Erhebungen (360) des Riegels vorzugsweise Erhebungen sind, die sich entlang der Längsachse (X) des Moduls wiederholen,
wobei die sich wiederholenden Erhebungen vorzugsweise Streifen sind.

3. Elektrische Verbindungsbaugruppe nach Anspruch 2, wobei die Anzahl der Erhebungen (360) des Riegels kleiner als diejenige (45) des Endverschlusses (4) ist, so dass eine Verriegelung in einer variablen Einsetzposition des Endverschlusses (4) im Hohlraum ermöglicht wird.

4. Elektrische Verbindungsbaugruppe nach einem der vorhergehenden Ansprüche, wobei die möglichen Einsetzpositionen jedes Endverschlusses (4) sich zwischen einer ersten äußersten Einsetzposition, in der seine Verriegelung in einem Hohlraum (31) von oben durch Unmöglichkeit der Einführung von Erhebungen (360) des Riegels, die in den Erhebungen (43) der Hülse des Endverschlusses (4) gleiten, erfolgt, und einer zweiten äußersten Einsetzposition befinden, in der seine Hülse (40) an dem leitenden Rohr (38) zum Längsanschlag kommt.

5. Elektrische Verbindungsbaugruppe nach einem der vorhergehenden Ansprüche, wobei das Modul mindestens zwei vorzugsweise U-förmige Riegel (35, 36), umfasst, die dazu eingerichtet sind, unabhängig voneinander auf dem Körper (30) zu gleiten.

6. Elektrische Verbindungsbaugruppe nach einem der vorhergehenden Ansprüche, die zwei Hohlräume des Moduls umfasst, die ausgerichtet sind, vorzugsweise parallel zur Längsachse (X) des Moduls.

7. Elektrische Verbindungsbaugruppe nach einem der vorhergehenden Ansprüche, wobei das Modul mindestens zwei Reihen von zwei Hohlräumen umfasst, die übereinander angeordnet sind.

8. Elektrische Verbindungsbaugruppe nach Anspruch 7, wobei die zwei leitenden Rohre (38), die in den Reihen von Hohlräumen aufgenommen sind, durch einen elektrischen Shunt (380) elektrisch miteinander verbunden sind oder nicht elektrisch miteinander verbunden sind.

9. Elektrische Verbindungsbaugruppe nach einem der vorhergehenden Ansprüche, welche mindestens eine Identifikationsmarkierung (44, 361) umfasst, die, falls sie nach dem Einsetzen eines Kabelendverschlusses (4) sichtbar bleibt, bedeutet, dass eine Verriegelung des Endverschlusses (4) unmöglich ist.

10. Elektrische Verbindungsbaugruppe nach einem der vorhergehenden Ansprüche, wobei das Modul eine oder mehrere Dichtungen (6) umfasst, die am Außenumfang eines Kontakts (41) an einem Kontaktbereich mit der Hülse (40), in der er angeschlossen, vorzugsweise gecrimpt ist, angeordnet sind.

11. Verbindungsbaugruppe mit Klemmleiste, die insbesondere dazu bestimmt ist, mehrere elektrische Kabel miteinander zu verbinden, umfassend:
- mindestens eine Verbindungsbaugruppe nach einem der vorhergehenden Ansprüche, deren mindestens ein elektrisches Verbindungsmodul (3) außerdem umfasst:
• mindestens einen Positionierstift (34), der vom Körper zur Außenseite des Moduls vorsteht,
• mindestens eine Verriegelungsplatte (32), die dazu eingerichtet ist, auf dem Körper zwischen einer Verriegelungsposition und einer Entriegelungsposition zu gleiten, wobei die Verriegelungsplatte eine Verriegelungserhebung (33) umfasst;
- mindestens eine Tragschiene (10), die dazu bestimmt ist, an einer Struktur, insbesondere einer Luftfahrzeugstruktur, befestigt zu werden, umfassend:
• mindestens eine Einsetznut (102), die dazu eingerichtet ist, den Positionierstift einzusetzen,
• mindestens eine Befestigungsnut (103) in der Verlängerung der Einsetznut, wobei die Befestigungsnut dazu eingerichtet ist, die Befestigung des Moduls durch Translation des Positionierstiftes aus der Einsetznut zu ermöglichen;
• mindestens eine Verriegelungserhebung (105), die dazu eingerichtet ist, mit der komplementären Verriegelungserhebung (33) der Platte bei der Translation des Positionierstiftes zusammenzuwirken, um die Platte aus ihrer Entriegelungsposition in Richtung ihrer Verriegelungsposition gleiten zu lassen und so die Befestigung des Verbindungsmoduls auf der Tragschiene zu verriegeln.

12. Klemmleiste (1), welche mehrere Verbindungsbaugruppen nach einem der Ansprüche 1 bis 10 umfasst, wobei die elektrischen Verbindungsmodule (3.1, 3.2, 3.3) der Verbindungsbaugruppen identische oder unterschiedliche Abmessungen wie Hohlräume mit identischen oder unterschiedlichen Abmessungen aufweisen, um die elektrischen Kabelendverschlüsse mit identischen oder unterschiedlichen Abmessungen aufzunehmen.

13. Luftfahrzeugstruktur, welche eine Tragschiene umfasst, auf der mindestens eine Klemmleiste (1) nach Anspruch 12 befestigt ist.

## Claims

1. Electrical connection assembly comprising:
- at least one electric cable termination (4), of longitudinal axis (X1), comprising a sleeve (40) and a preferably cylindrical contact (41) held inside the sleeve, the contact being intended to be connected, preferably crimped, to an electric cable (2), the sleeve (40) comprising reliefs (43) on its outer periphery;
- at least one electrical connection module (3, 3.1, 3.2, 3.3) of longitudinal axis (X), comprising:
• a body (30) made of electrically insulating material, comprising at least one cavity (31) designed to accommodate the electric cable termination (4),
• an electrically conductive tube (38) designed to connect at least one contact of the electric cable termination to another electrically conductive element (4, B),
• at least one latch (35, 36), preferably in the shape of a U, comprising reliefs (360) arranged towards the inside, the latch being designed to slide over the body (30) between an unlocking position and a locking position in which the reliefs (360) of the latch (35, 36) are interleaved in the complementary reliefs (43) of a sleeve (40) of the termination (4) so as to prevent the latter (4) from moving in translation along the axis (X) with respect to the body (30), in a position in which said termination (4) is inserted in the cavity (31) of the body (30), the electrical connection assembly being **characterized in that** the insertion position is selected from among at least two possible positions (L1, L2).

2. Electrical connection assembly according to Claim 1, the reliefs (43) of the sleeve being reliefs that repeat along its longitudinal axis (X1),
the reliefs (360) of the latch preferably being reliefs that repeat along the longitudinal axis (X) of the module,
the repeating reliefs preferably being ridges.

3. Electrical connection assembly according to Claim 2, the number of reliefs (360) of the latch being lower than that (45) of the termination (4), so as to allow locking of the termination (4) in the cavity in a variable insertion position.

4. Electrical connection assembly according to one of the preceding claims, the possible insertion positions of each termination (4) being between a first insertion end position, in which it is locked in a cavity (31) from above by it being impossible for reliefs (360) of the latch sliding into the reliefs (43) of the sleeve of the termination (4) to interleave, and a second insertion end position, in which its sleeve (40) comes into longitudinal abutment against the conductive tube (38).

5. Electrical connection assembly according to one of the preceding claims, the module comprising at least two latches (35, 36), preferably U-shaped latches, designed to slide over the body (30) independently of one another.

6. Electrical connection assembly according to one of the preceding claims, comprising two cavities of the module which are aligned, preferably parallel to the longitudinal axis (X) of the module.

7. Electrical connection assembly according to one of the preceding claims, the module comprising at least two rows of two cavities arranged one on top of another.

8. Electrical connection assembly according to Claim 7, the two conductive tubes (38) accommodated in the rows of cavities being electrically connected to one another by an electric shunt (380), or not being electrically connected to one another.

9. Electrical connection assembly according to one of the preceding claims, comprising at least one identification marker (44, 361) that, if it/they remain(s) visible after the insertion of a cable termination (4), mean(s) that it is impossible to lock the termination (4).

10. Electrical connection assembly according to one of the preceding claims, the module comprising one or more gaskets (6) arranged on the outer periphery of a contact (41) in a contact area with the sleeve (40) in which it is connected, preferably crimped.

11. Terminal block connection assembly intended in particular to connect a plurality of electrical cables to one another, comprising:
- at least one connection assembly according to one of the preceding claims, the at least one electrical connection module (3) of which furthermore comprises:
• at least one positioning piece (34) projecting from the body towards the outside of the module,
• at least one locking plate (32), designed to slide over the body between a locking position and an unlocking position, the locking plate comprising a locking relief (33) ;
- at least one support rail (10) intended to be fastened to a structure, in particular an aircraft structure, comprising:
• at least one insertion groove (102) designed for the insertion of the positioning piece,
• at least one fastening groove (103) in the extension of the insertion groove, the fastening groove being designed to allow the module to be fastened through the translational movement of the positioning piece from the insertion groove;
• at least one locking relief (105) designed to interact with the complementary locking relief (33) of the plate when the positioning piece is moved in translation, so as to make the plate slide from its unlocking position to its locking position, and thus to lock the fastening of the connection module to the support rail.

12. Terminal block (1) comprising a plurality of connection assemblies according to one of Claims 1 to 10, the electrical connection modules (3.1, 3.2, 3.3) of the connection assemblies being of identical or different sizes, with cavities of identical or different sizes for accommodating the terminations of electric cables of identical or different sizes.

13. Aircraft structure comprising a support rail on which is fastened at least one terminal block (1) according to Claim 12.
